# EUROPEAN PATENT APPLICATION

(11) **EP 1 241 861 A2**
(43) Date of publication of application: **18.09.2002**
(21) Application number: 02005671.9
(22) Date of filing: 12.03.2002
(51) Int. Cl.: H04M 1/27

(54) **Method and apparatus for voice recognition dialing and using memorized dialing prefixes**

(30) Priority: 15.03.2001 JP 2001074894
(71) Applicant: Denso Corporation, Kariya-city, Aichi-pref., 448-8661 (JP)
(72) Inventor: Sobue, Eiji, Kariya-city, Aichi-pref., 448-8661 (JP)
(74) Representative: Winter, Brandl, Fürniss, Hübner, Röss, Kaiser, Polte Partnerschaft

(57) **Abstract**

Telephone numbers are entered into an input device (8, 30) by a voice recognition method and apparatus. Location codes, such as country codes or area codes, can be generated by voice recognition of the area name (104, 105). The method and apparatus also permit telephone numbers to be entered manually. This method of entering telephone numbers facilitates hands-free telephone calls in a vehicle.

## Description

### BACKGROUND OF THE INVENTION

The present invention relates to a method for generating and dialing phone numbers based on voice input of either numerals or a location name and numerals.

A known navigation device for a vehicle is capable of making a telephone call from a cellular telephone by receiving a telephone number from a touch switch or from a voice recognition device.

When a user inputs a telephone number, if the telephone number is a domestic number, the user must input an area code and a local number (also known as local code and subscriber number, respectively). If the telephone number is a foreign number, the user must input a number associated with an international telephone company, a country code and then a domestic telephone number. In general, users primarily make local telephone calls and seldom make telephone calls that require an area code or a country code. For this reason, when a long distance call is made, the user often does not know the area code or the country code, and the user needs to consult a telephone book for the area code or the country code.

A proposed solution to this problem is disclosed in Japanese unexamined patent publication (JP-A) No. 11-313169. In the apparatus of that publication, country codes are stored in association with corresponding country names, or area codes are stored in association with area names, in a memory. A country name or an area name is displayed on a display unit. When a user selects a country name or an area name by operating a switch, the corresponding country code or area code corresponding to the country name or area name selected by the user is read from the telephone number memory and displayed on a display unit.

According to the publication (JP-A No. 11-313169), even if the user does not know the country code or the area code of the call destination, if the user knows the country name or the area name of the call destination, the user can determine the country code or the area code by selecting the country name or the area name displayed on the display unit by performing a switching operation.

However, this necessitates the selection of the country name or the area name displayed on the display unit by the switching operation. The user must operate many switches to display the desired country name or area name from a menu screen, which may be troublesome, particularly if the caller is operating a vehicle.

### SUMMARY OF THE INVENTION

An object of the present invention is to simplify the operation of inputting a country name or an area name to easily generate a whole telephone number by identifying a country code or an area code from the country name or the area name.

In order to achieve the foregoing object, a method is provided for entering numerals in a telephone number input device. The method includes performing voice recognition to determine whether the name of a location has been voiced by a user. If a location name is recognized, a location code that is associated with the name of the location is retrieved from a database, and the location code is temporarily stored. Further, the method includes receiving and storing telephone number numerals entered by the user to form a telephone number.

The step of receiving telephone number numerals entered by the user may include recognizing voiced telephone number numerals by voice recognition or manual entry.

The method may include displaying the telephone number for the user or announcing received numerals through a speaker (or both).

The method may include sending the telephone number to a telephone device for making a telephone call, and this may occur when a voice instruction to make a telephone call is recognized.

The method may include the step of adding a predetermined company code associated with a long distance telephone company as a prefix to the telephone number before the telephone number is sent to the telephone device.

In another aspect of the invention, the method includes determining whether a name of a location, a numeral, or a dial instruction has been voiced by a user. If a location name is recognized, a location code that is associated with the name of the location is retrieved from a database and the location code is stored temporarily. If telephone number numerals are recognized, the recognized numerals are stored. If an instruction to dial is recognized, a telephone number based on the stored location code and the stored numerals is sent to a telephone device.

The method may include displaying the location code, if one is recognized, and displaying the numerals as they are recognized.

The method may include announcing numerals or locations that are recognized by producing sound through a speaker.

The method may include the step of receiving a telephone number numeral entered manually by the user and storing the manually entered numeral as part of the telephone number.

The method may include the step of adding a predetermined company code associated with a long distance telephone company as a prefix to the telephone number before the telephone number is sent to the telephone device.

In another aspect, the invention includes an apparatus for generating telephone numbers. The apparatus includes a microphone and a computer, which is connected to the microphone. The computer performs voice recognition to determine whether the name of a location has been voiced by a user. The computer retrieves and stores a location code associated with the name of the location from a database, if a location name is recognized. The computer receives and stores telephone number numerals entered by the user to form a telephone number. The apparatus performs the procedures set forth above.

Thus, the apparatus may include switches for permitting manual entry of numerals.

Further, the apparatus may include a display connected to the computer for displaying a telephone number for the user.

In addition, the apparatus may include a speaker connected to the computer for announcing received numerals.

Other features and advantages of the invention will become apparent from the following description of a preferred embodiment made in reference to the accompanying drawings, which form a part of the specification.

### BRIEF DESCRIPTION OF THE DRAWINGS

Fig. 1 is a block diagram of a navigation device for a vehicle that includes a telephone number input device.
Fig. 2 is a flowchart showing a telephone number input process performed by the control circuit 8 in Fig. 1.
Fig. 3 is a flowchart showing another telephone number input process performed by the control circuit 8 in Fig. 1.
Fig. 4 is a block diagram showing another embodiment of a telephone number input device.

### DETAILED DESCRIPTION OF THE PREFERRED EMBODIMENTS

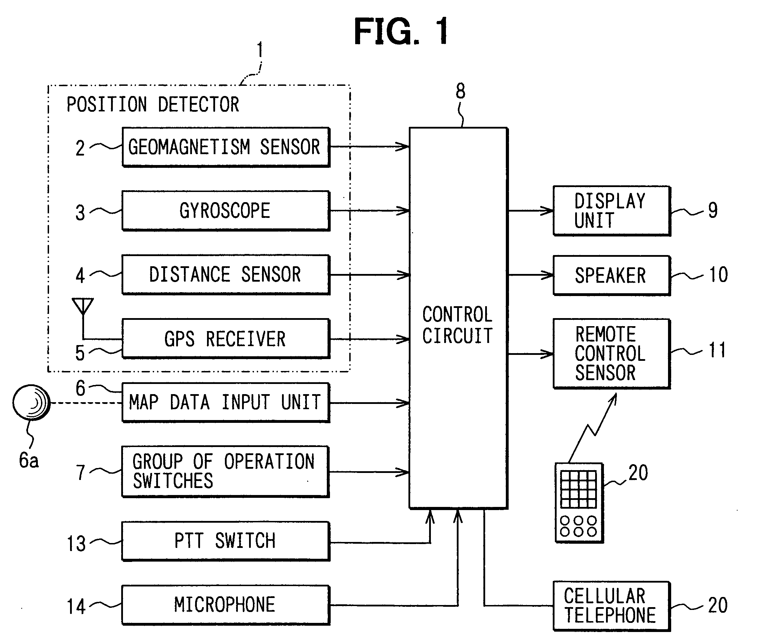

Figure 1 shows a navigation device for a vehicle in accordance with one embodiment of the present invention. The navigation device has a position detection unit 1 for detecting the current position of a vehicle. The position detection unit 1 includes a geomagnetism sensor 2, a gyroscope 3, a distance sensor 4, and a GPS receiver 5. Further, the navigation device is provided with a map data input unit 6 for reading map data from a map data memory medium (map data memory unit) 6a, such as a CD-ROM, a DVD-ROM, a memory card, a hard disc or the like, a group of operation switches 7 for performing various kinds of operations necessary for navigation (including touch switches and mechanical switches integrated with a display unit 9), a control circuit (or control unit) 8 for executing various processes necessary for navigation, the display unit 9 for displaying a map and the like, a speaker 10, a remote control sensor 11 for receiving a signal from a remote control unit 12, a PTT (push to talk) switch 13 operated when a voice recognition is performed, and a microphone 14. The control circuit 8 can be connected to a cellular telephone 20.

The control circuit 8 reads map data from the map data memory medium 6a via the map data input unit 6 and navigates a vehicle on the basis of the map data and the present position of the vehicle. The control circuit performs navigation when the user manipulates the group of operation switches 7 and the remote control unit 12 such that map data is read out of the map data memory medium 6a. A route to a destination is set and route guidance is conducted for the set route by the use of display and voice.

Further, the control circuit 8 allows the operator to make a hands-free telephone call from the cellular telephone 20 using the speaker 10 and the microphone 14. The control circuit permits the telephone number to be entered by the use of voice recognition through the microphone 14. The control circuit 8 may be a computer or a plurality of computers.

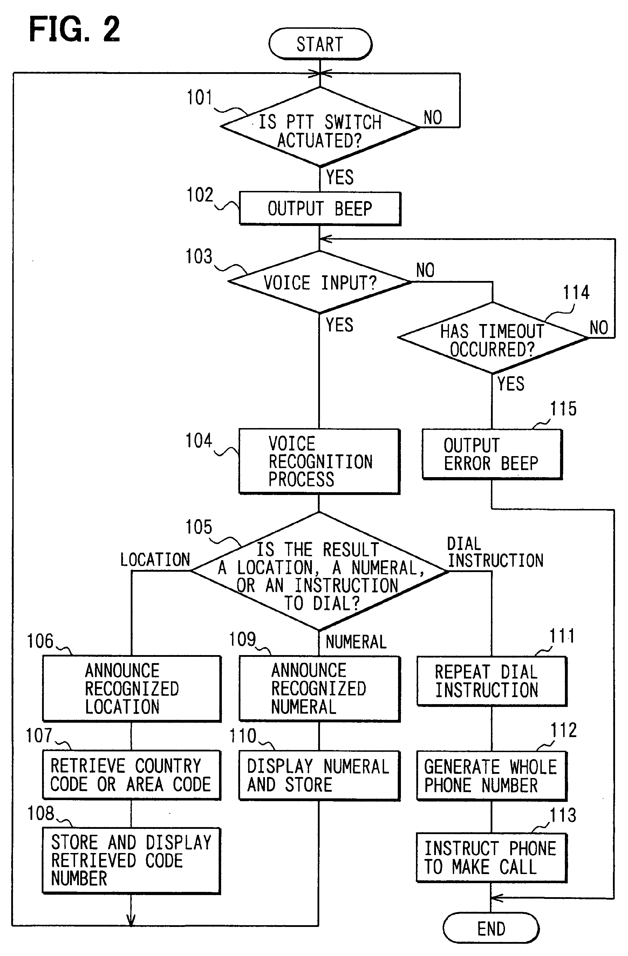

Next, a calling procedure performed by the control circuit 8 will be described. Figure 2 shows the steps of the process. When the user presses the PTT switch 13 to enter a phone number by voice recognition, the control circuit 8 causes the speaker 10 to produce a beep to signal the user to speak. When the user speaks words indicating that a telephone number will be entered, the control circuit 8 recognizes the words and causes the speaker 10 to produce a message such as "input a telephone number." Then, the control circuit starts a telephone number input mode and displays a telephone number input screen on the display unit 9. Then, the control circuit 8 begins the process of Fig. 2.

In the process shown in Fig. 2, it is assumed that all the inputs from the user are performed by voice. For this reason, first, it is determined whether the PTT switch 13 is pressed or not (step 101). When the PTT switch 13 is pressed, the speaker 10 outputs a beep to signal the user to speak (step 102). Next, it is determined whether a voice input has occurred (step 103). When a voice input has occurred, a process for recognizing the voice is executed (step 104) and a result of the recognition is classified (step 105).

If the user pronounces a country name (for example, America or Germany), because the user does not know the country code for an international call or, if the user pronounces an area name (for example, New York or Munich), because the user does not know the area code for a domestic call, at step 105, it is determined that a country name or area name was recognized, and the process branches from step 105 to step 106.

If the words were recognized, the recognized words are announced, or repeated, through the speaker 10 (step 106). Then, the country code or area code (location code) corresponding to the recognized country name or area name is retrieved (step 107). The control circuit 8 has a telephone number memory, which stores country codes or area codes (or both country codes and area codes) corresponding to countries or areas in a database, and the control circuit 8 retrieves the country code or the area code corresponding to the recognized country name or area name with reference to the database. Then, the retrieved country code or area code is displayed on the telephone number input screen of the display unit 9 and is temporarily stored in a memory of the control circuit 8 (step 108). To be specific, the telephone number memory stores country codes in correspondence with countries or area codes in correspondence with areas (or both) in the form of a table in the memory of the control circuit 8. According to the present invention, the country code or the area code corresponding to the country name or the area name spoken by the user is displayed on the display unit 9. Therefore, unlike a typical voice recognition function in which words are simply recognized and announced (repeated), the present invention has the advantage that merely by pronouncing a country name or an area name, the country code or area code corresponding to the country name or area name is produced and the telephone number is easily generated on the basis of the resulting country code or area code.

Thereafter, the user pronounces, in sequence, the numbers following the country name or the area name (a domestic telephone number in the case of the international telephone call and a local number in the case of a domestic telephone call). A numeral is pronounced every time the user presses the PTT switch 13 and the speaker 10 outputs a beep. In this case, every time a numeral of the number is pronounced, the process branches from step 105 to step 109 and each recognized numeral is announced through the speaker 10 (step 109). Then, the recognized numerals are displayed on the telephone number input screen of the display 9 following the country code or the area code described above and stored in the memory of the control circuit 8 (step 110).

When the user finishes entering all the numerals and voices an instruction to start making a telephone call (for example, "make a telephone call"), the process branches from step 105 to step 111, and the instruction to start making a telephone call is announced, or repeated back to the user (step 111). Then, to make the telephone call, the whole telephone number is generated on the basis of the information stored in the memory (step 112). Here, in the case of an international telephone call, the full telephone number is generated by adding the number (the company code) of a predetermined international telephone company before the country code, as a prefix, and the domestic telephone number is placed after the country code. In the case of the domestic telephone call, the whole telephone number is generated by placing the local number after the area code. Thereafter, the whole telephone number and an instruction to make a telephone call are sent to the cellular telephone 20 (step 113). This is the end of the process shown in Fig. 2.

In this manner, it is possible to make a hands-free telephone call from the cellular telephone 20 using the microphone 14 and the speaker 10.

If a time-out occurs before the voice recognition is complete, the determination at the step 114 is YES, an error beep is produced by the speaker 10 (step 115), and the process of Fig. 2 terminates.

A case where the user pronounces the country name or the area name has been described, however, if the user knows all the numerals when making an international telephone call or a domestic telephone call, the user does not need to pronounce the country name or the area name but can make a telephone call by entering all the numerals by voice in sequence and by subsequently voicing an instruction to start making a telephone call.

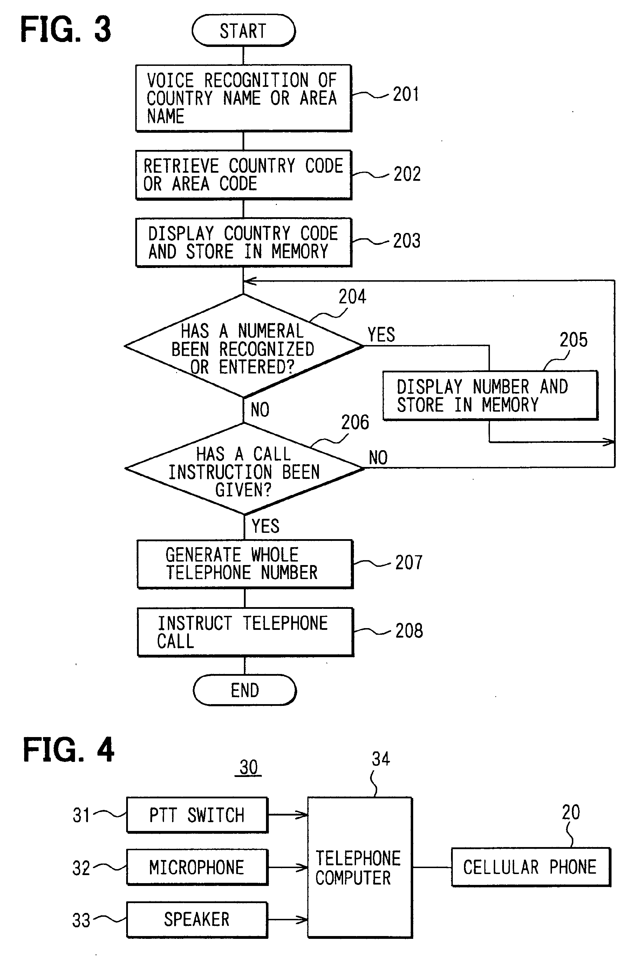

Further, while all the inputs from the user are done by voice recognition in the process of Fig. 2, numerals can also be inputted to the navigation unit by the group of operation switches 7 or the switches of the remote control unit 12. Thus, the country name or the area name can be inputted by voice recognition, and the subsequent numerals can be inputted by voice recognition or manually with the switches 7 or the remote control unit 12. Further, if numerals are entered manually, it is recommended that the numerals be displayed on the input screen of the display unit 9 and that the numerals be inputted by the use of touch switches provided on the display unit 9. Such an embodiment will be described with reference to Fig. 3, which is a process performed by the control circuit 8.

When the control circuit 8 recognizes that the user plans to enter a telephone number (for example, after the phrase "telephone number" is recognized), it starts a telephone number input mode and displays the telephone number input screen on the display unit 9. Then, the process of Fig. 3 is performed.

First, a voice recognition process for recognizing the country name or the area name is performed (step 201). This voice recognition process is similar to the process of steps 101 to 104, 114, and 115 of Fig. 2. Thus, a beep is produced by the speaker 10, which signals the user to speak, when the PTT switch 13 is pressed. When a voice input has occurred, a process for recognizing words is executed, and a recognized location is announced. Further, if no voice input occurs after a predetermined time period (if a time-out occurs), an error beep is produced by the speaker 10 and the process shown in Fig. 3 terminates.

Next, the country code or the area code corresponding to the recognized country name or area name is retrieved (step 202), and the retrieved country code or area code is displayed on the telephone number input screen of the display unit 9 and temporarily stored in the memory of the control circuit 8 (step 203). These steps are the same as steps 107 and 108 in Fig. 2.

Then, the user inputs the numerals that follow the country name or the area name (a domestic telephone number in the country in the case of the international telephone call, and a local number in the case of the domestic telephone call) in sequence by the use of voice recognition or the switches. In the case of voice recognition, the voice recognition process described with reference to Figure 2 is performed. Whether the numerals are entered by the use of voice recognition or manually (if the determination at step 204 is YES), the inputted numerals are displayed on the telephone number input screen of the display unit 9 following the country code or area code and are temporarily stored in the memory of the control circuit 8 (step 205).

Then, it is determined whether the user has voiced an instruction to start making a telephone call or not (step 206). In this case, the determination is made by recognizing the words of the instruction or by recognizing that the instruction to start making a telephone call is displayed on the telephone number input screen of the display unit 9 as a result of use of the touch switches.

When the user finishes entering all the numerals and gives an instruction to start making a telephone call, as in step 112 of Fig. 2, the whole telephone number is generated on the basis of the information stored in the memory (step 207). Then, as in step 113 of Fig. 2, the whole telephone number is sent to the cellular telephone 20 along with an instruction to start making a telephone call (step 208), and the process shown in Fig. 3 is terminated.

Although the telephone call was described as being made by the cellular telephone 20, if the navigation device itself is provided with a radio and the ability to make a telephone call, it is possible to make a telephone call by the use of the radio.

Further, the navigation device can identify a location from the telephone number, which allows the navigation device to set a destination or a map display according to the location identified by the telephone number. In the case where the user inputs the telephone number to set such a location, the user may use the domestic telephone number generated by the process described above. To be more specific, in the control circuit 8, in the case where the location is set by the telephone number, the telephone number input process is executed and, instead of the instruction to start making a telephone call with the telephone number, the location of the phone number is generated.

Further, the telephone number input device of the present invention not only may be incorporated in the navigation device but also, as shown in Fig. 4, may be an independent telephone number input device 30. The telephone number input device 30 shown in Fig. 4 includes a PTT switch 31, a microphone 32, a speaker 33, and a telephone computer 34. The telephone computer 34 performs voice recognition and the steps that are shown in Fig. 2. In this case, since the telephone number input device 30 is not provided with a display unit, the steps of displaying numbers of Fig. 2 are omitted. However, it is recommended that the telephone number be displayed by the display of the cellular telephone 20 or that an external display unit be connected to the telephone computer 34.

Further, while the telephone number is inputted only by voice in the embodiment of Fig. 4, it is also recommended that a switching unit be provided so that the telephone number can be entered manually or by voice recognition. In this case, the telephone computer 34 performs the steps shown in Fig. 3.

The telephone number input device 30 may be a device specifically intended for entering telephone numbers and may be provided as a kit for making hands-free calls with the microphone 32 and the speaker 33. Further, it is also recommended that a cellular telephone or a stationary telephone be provided with the telephone number input device 30. In this manner, it is possible to offer both calling and number entry capability.

In the device of Figure 1, the part for performing the voice recognition forms a voice recognition unit, and the group of operation switches 7 and the remote control unit 12 form a switching unit. The voice recognition unit and the switching unit form an input unit. Further, steps 107 and 202 correspond to a retrieving unit, and steps 112 and 207 correspond to whole number generating unit. Steps 113 and 208 correspond to a calling unit. Here, the respective steps shown in Fig. 2 and Fig. 3 accomplish the respective functions. A program for accomplishing the respective functions may be distributed by the use of a network or by storage media. Such a program is installed in the telephone number input device.

While preferred embodiments of the invention have been illustrated and described in considerable detail, the present invention is not to be considered limited to the precise constructions disclosed. Various adaptations, modifications and uses of the invention may occur to those skilled in the arts to which the invention relates. It is the intention to cover all such adaptations, modifications and uses falling within the scope and spirit of the claims.

## Claims

1. A method for entering numerals in a telephone number input device, the method comprising:
performing voice recognition (104, 105, 201) to determine whether the name of a location has been voiced by a user;
retrieving a location code that is associated with the name of the location from a database (107, 202) and storing the location code temporarily, if a location name is recognized; and
receiving and storing telephone number numerals entered by the user (105, 109, 110) to form a telephone number.

2. The method of claim 1 wherein the step of receiving telephone number numerals entered by the user includes recognizing voiced telephone number numerals by voice recognition (104, 105, 201, 204).

3. The method of claim 1 or 2 wherein the step of receiving and storing the telephone number numerals includes receiving telephone number numerals entered manually (204).

4. The method of any of claims 1 to 3, wherein the step of receiving and storing the telephone number numerals includes receiving the numerals by voice recognition or by manual entry(201, 204).

5. The method of any of claims 1 to 4 including displaying the telephone number for the user (110, 205).

6. The method of any of claims 1-6 including announcing received numerals through a speaker.

7. The method of any of claims 1 to 6 including sending the telephone number to a telephone device for making a telephone call.

8. The method of any of claims 1 to 6 including the step of sending the telephone number to a telephone device when a voice instruction to make a telephone call is recognized (113, 208).

9. The method of claim 7 or 8 including the step of adding a predetermined company code associated with a long distance telephone company as a prefix to the telephone number before the telephone number is sent to the telephone device.

10. A method for entering numerals in a telephone number input device, the method comprising:
performing voice recognition on a voice input (104);
determining whether a name of a location, a numeral, or a dial instruction has been voiced by a user (105);
if a location name is recognized, retrieving a location code that is associated with the name of the location from a database (107) and storing the location code (108) temporarily;
if telephone number numerals are recognized, storing the recognized numerals (110); and
if an instruction to dial is recognized, generating a telephone number based on the stored location code and the stored numerals (112) and sending the telephone number to a telephone device (113).

11. The method of claim 10 including displaying the location code, if one is recognized (108), and displaying the numerals as they are recognized (110).

12. The method of claim 10 or 11 including announcing numerals that are recognized by producing sound through a speaker (10).

13. The method of any of claims 10 to 12 including, if a location name is recognized, announcing the recognized location name by producing sound through a speaker (10).

14. The method of any of claims 10 to 13 including the step of receiving a telephone number numeral entered manually by the user (204) and storing the manually entered numeral as part of the telephone number (205).

15. The method of any of claims 10 to 14 including the step of adding a predetermined company code associated with a long distance telephone company as a prefix to the telephone number before the telephone number is sent to the telephone device.

16. An apparatus for entering numerals in a telephone number input device, the apparatus comprising:
voice recognition means (8, 14) to determine whether the name of a location has been voiced by a user;
means (8) for retrieving a location code that is associated with the name of the location from a database, if a location code is recognized;
means (8) for storing the retrieved location code temporarily; and
means (8, 7, 14) for receiving and storing telephone number numerals entered by the user to form a telephone number.

17. The apparatus of claim 16 wherein the means (8) for receiving telephone number numerals entered by the user performs voice recognition to recognize voiced telephone number numerals.

18. The apparatus of claim 16 or 17 wherein the means (8, 7, 14) for receiving and storing the telephone number numerals includes means (7,8) for receiving telephone number numerals entered manually.

19. The apparatus of any of claims 16 to 18, wherein the means (8, 7, 14) for receiving and storing the telephone number numerals includes means (14, 8, 7) for receiving the numerals by voice recognition or by manual entry.

20. The apparatus of any of claims 16 to 19 including display means (8, 9) for displaying the telephone number for the user.

21. The apparatus of any of claims 16 to 20 including a speaker (10) for announcing received numerals.

22. The apparatus of any of claims 16 to 21 including sending means (8) for sending the telephone number to a telephone device (20) for making a telephone call.

23. The apparatus of any of claims 16 to 21 including means (8) for sending the telephone number to a telephone device (20) when a voice instruction to make a telephone call is recognized.

24. The apparatus of claim 22 or 23 including means (8) for adding a predetermined company code associated with a long distance telephone company as a prefix to the telephone number before the telephone number is sent to the telephone device (20).

25. An apparatus for entering numerals in a telephone number input device, the apparatus comprising:
means (8) for performing voice recognition on a voice input;
means (8) for determining whether a name of a location, a numeral, or a dial instruction has been voiced by a user;
if a location name is recognized, means (8) for retrieving a location code that is associated with the name of the location from a database and for storing the location code (108) temporarily;
if telephone number numerals are recognized, means (8) for storing the recognized numerals; and
if an instruction to dial is recognized, means (8) for generating a telephone number based on the stored location code and the stored numerals and means (8) for sending the telephone number to a telephone device (20).

26. The apparatus of claim 25 including means (8, 9) for displaying the location code, if one is recognized, and for displaying the numerals as they are recognized.

27. The apparatus of claim 25 or 26 including a speaker (10) for announcing numerals that are recognized.

28. The apparatus of any of claims 25 to 27 including, if a location name is recognized, a speaker (10) for announcing the recognized location name.

29. The apparatus of any of claims 25 to 28 including means (7, 8) for receiving a telephone number numeral entered manually by the user and means (8) for storing the manually entered numeral as part of the telephone number.

30. The apparatus of any of claims 25 to 29 including means (8) for adding a predetermined company code associated with a long distance telephone company as a prefix to the telephone number before the telephone number is sent to the telephone device (20).
